Europäisches Patentamt

European Patent Office

Office européen des brevets

(19)

(11) Numéro de publication: **0 1 1 2 290**
**B1**

# (12) FASCICULE DE BREVET EUROPEEN

(45) Date de publication du fascicule du brevet:
27.09.89

(51) Int. Cl.⁴: **B 29 C 47/78**, B 29 C 47/64

(21) Numéro de dépôt: 83810562.5

(22) Date de dépôt: 05.12.83

(54) Extrudeuse à vis pour matières plastiques.

(30) Priorité: 21.12.82 CH 7439/82

(43) Date de publication de la demande:
27.06.84 Bulletin 84/26

(45) Mention de la délivrance du brevet:
27.09.89 Bulletin 89/39

(84) Etats contractants désignés:
AT BE CH DE FR GB IT LI NL SE

(56) Documents cités:
EP-A- 0 001 661
CH-A- 551 853
DE-A- 2 041 653
DE-A- 2 612 477
DE-B- 2 754 877
FR-A- 2 385 517

(73) Titulaire: Maillefer S.A., Route du Bois,
CH-1024 Ecublens Canton de Vaud (CH)

(72) Inventeur: Maillefer, Charles, Au Village,
CH-1164 Buchillon (CH)

(74) Mandataire: Rochat, Daniel Jean et al, Bovard SA
Ingénieurs-conseils ACP Optingenstrasse 16,
CH-3000 Bern 25 (CH)

## Description

La présente invention se rapporte aux extrudeuses à vis et plus particulièrement à celles de ces extrudeuses qui sont divisées dans leur longueur en plusieurs zones comprenant au moins une zone d'alimentation à l'amont, et une zone de plastification faisant suite à la zone d'alimentation vers l'aval.

Une extrudeuse à vis a deux fonctions: l'une mécanique qui consiste à pousser la matière comme une pompe, pour vaincre la résistance de la filière, et l'autre thermique qui consiste à chauffer la matière d'une manière uniforme jusqu'au point de ramollissement convenable à sa formation dans la filière. Les extrudeuses doivent satisfaire non seulement aux exigences de qualité qui impliquent l'homogénéité de la masse de la matière plastique parvenant dans la tête d'extrusion, mais encore aux exigences économiques usuelles; en effet, une extrudeuse doit être capable de refouler la matière plastique qu'elle traite avec un débit aussi grand que possible. Pour augmenter ce débit, on augmente la vitesse de rotation de la vis. A une certaine vitesse de rotation de la vis, la matière plastique devient trop chaude pour garder sa forme à la sortie de la filière, ou même une dégradation de la matière plastique due à une surchauffe locale apparaît: on atteint la limite thermique.

L'objet de la présente invention se rapporte à une extrudeuse pour matières plastiques, divisée de manière connue en soi en une zone amont d'alimentation et une zone aval de plastification, formée d'une vis, d'un cylindre, et de moyens d'entraînement de la vis en rotation, accouplés directement à la vis, dans laquelle la vis comporte dans la zone amont un agencement amont à un filet hélicoïdal coopérant avec un agencement de nervures ménagé dans la face interne du cylindre pour assurer un refoulement forcé de la matière et dans la zone aval un agencement aval à deux filets hélicoïdaux de pas différents déterminant un canal d'entrée de section décroissante et un canal de sortie de section croissante, cet agencement aval coopérant avec une face interne lisse de la zone aval du cylindre, et dans laquelle, en outre, le cylindre est constitué de deux parties métalliques séparées l'une de l'autre dans le sens de l'axe de la vis par une barrière thermique.

Des extrudeuses de ce genre sont déjà connues, notamment par le brevet français FR 2 385 517. Il est également connu de prévoir des rainures rectilignes dans la partie du cylindre correspondant à la zone d'alimentation. Ainsi, le brevet CH 551 853 décrit une extrudeuse dont la face interne du cylindre est conformée de cette manière.

L'homme du métier s'occupant d'extrudeuses se trouve ainsi confronté au problème suivant: concilier une augmentation de débit avec l'exigence d'un produit formé homogène ne dépassant pas une température déterminée.

Cependant, selon les cas, les solutions à retenir peuvent différer. Il s'agit en effet de réaliser une combinaison optimale de différents moyens techniques, afin d'atteindre de cas en cas un but particulier. Le document français susmentionné concerne une extrudeuse polyvalente permettant d'obtenir un débit homogène aussi élevé que possible sans surchauffe. On a prévu plusieurs circuits de fluide caloporteur agissant sur toutes les parties de l'extrudeuse. Cette construction est cependant relativement lourde et coûteuse et, dans certains cas d'utilisation extrême, il s'est révélé que la stabilité thermique du fonctionnement était difficilement atteignable.

La présente invention a pour but de remédier à de tels défauts, et de permettre l'utilisation d'une extrudeuse du genre mentionné au début, de construction simple et d'encombrement réduit, pour produire un extrudat homogène à la température requise, à l'encontre d'une résistance élevée dans la filière, et cela dans des conditions largement indépendantes de la matière à traiter.

Dans ce but, l'invention consiste en un procédé de réglage qui est caractérisé en ce que le réglage thermique de la machine est assuré exclusivement par un circuit de refroidissement passant dans des conduits logés dans l'épaisseur de la zone amont du cylindre, et ce réglage est conduit de manière que la matière plastique en contact avec le cylindre dans ladite zone amont soit maintenue à l'état solide au moins jusqu'à la barrière thermique.

En d'autres termes, on prévoit de faire fonctionner l'extrudeuse et particulièrement sa vis en deux zones séparées dont l'une est destinée à pousser les granulés ou la poudre en les maintenant froids aussi longtemps que possible, de manière à assurer un refoulement aussi positif que possible. La partie amont du cylindre sera donc fortement refroidie avec la circulation d'un fluide froid, tel que l'eau.

En vue de favoriser la poussée vers l'aval, la face intérieure du cylindre dans la zone d'alimentation est de préférence pourvue de rainures, soit de rainures longitudinales parallèles, soit de rainures en spirales dans un sens opposé à celles de la vis.

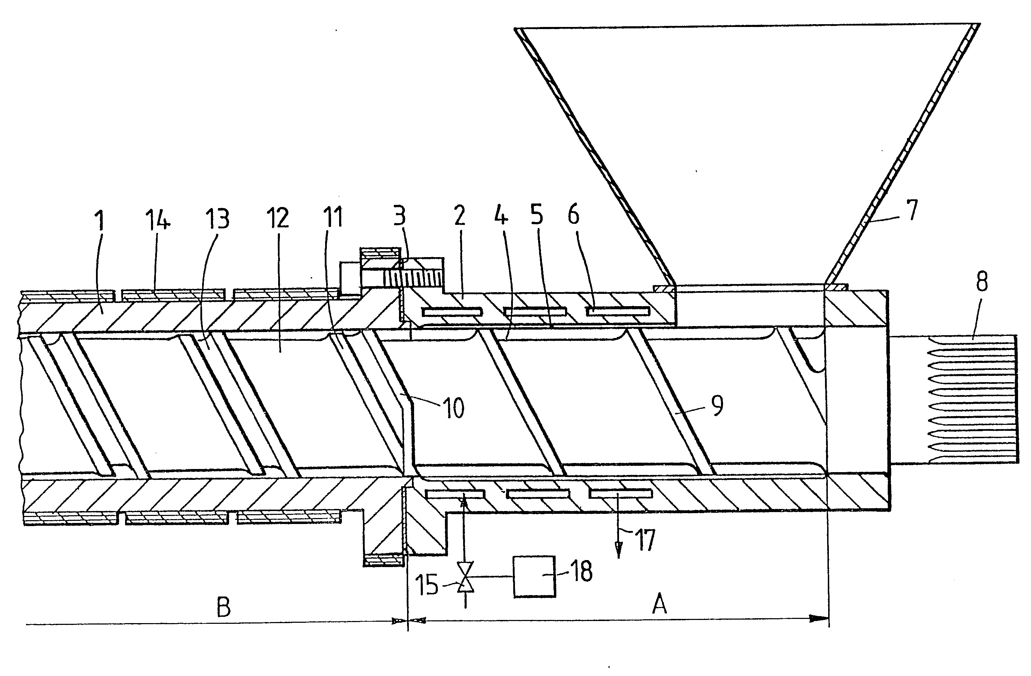

On va décrire ci-après, à titre d'exemple, une forme de réalisation de l'extrudeuse selon l'invention en se référant au dessin annexé dont la figure unique présente une vue en coupe longitudinale partielle d'une forme d'exécution de l'extrudeuse.

La figure unique est une vue générale d'une extrudeuse à vis dont certains éléments sont identiques à ceux que l'on trouve dans les extrudeuses classiques. Le cylindre 1 comporte à son extrémité amont une ouverture au-dessus de laquelle est fixée une trémie 7. La partie cylindrique du cylindre se prolonge à l'amont de la trémie 7 par un élément d'extrémité qui comporte un palier pour la vis 4 et des moyens assurant l'étanchéité de la vis par rapport au cylindre; ces éléments usuels ne sont pas représentés ici.

La vis 4 à noyau cylindrique comporte à son extrémité une zone pourvue de gorges d'accouplement 8 qui permettent de la relier à un moteur d'entraînement.

On décrira maintenant en détail la construction du cylindre 1. Le cylindre est constitué de deux parties métalliques séparées par une barrière thermique constituée d'un joint d'isolation thermique 3. La partie amont présente dans sa face interne des rainures longitudinales parallèles 5. Cette partie comporte en outre des conduits 6 ménagés dans l'épaisseur de sa paroi, conduits servant à la circulation d'un fluide de refroidissement à l'intérieur du cylindre tout le long de sa partie amont. Entre les brides de fixation des parties amont et aval du cylindre est intercalé un joint d'isolation thermique 3. Une barrière thermique à refroidissement pourrait être aussi prévue ou des éléments isothermes empêchant tout transfert de chaleur d'une partie à l'autre.

La vis est divisée dans sa longueur en une zone d'alimentation A et une zone de plastification B. Elle pourrait également comporter une zone d'homogénéisation usuelle à l'aval de la zone de plastification. Dans la zone d'alimentation A, la vis comporte un filet hélicoïdal 9. En longueur, la zone d'alimentation A s'étend jusqu'à la barrière thermique 3.

La zone de plastification B de la vis débute juste après la barrière thermique 3. Cette zone comporte deux filets 10 et 11, le filet 11 s'étendant dans le prolongement du filet 9. Les filets 10 et 11 déterminent, avec le noyau de la vis et le cylindre, un canal d'entrée 12 et un canal de sortie 13. La section du canal d'entrée 12 diminue vers l'aval tandis que la section du canal de sortie 13 augmente vers l'aval de manière à évacuer la matière visqueuse ou liquide au fur et à mesure de sa formation. Dans la forme d'exécution présente, la profondeur du canal d'entrée 12 diminue progressivement vers l'aval tandis que la profondeur du canal de sortie 13 augmente progressivement vers l'aval. La surface sommitale du filet 11 est contenue dans une surface cylindrique coaxiale à la vis dont le diamètre est plus petit que le diamètre interne du cylindre 1.

Revenant à la constitution d'ensemble de l'extrudeuse, on décrira ci-après les différentes fonctions des éléments présentés.

La zone d'alimentation A a pour fonction d'introduire et de pousser dans le cylindre la matière plastique en granulés ou en poudre contenue dans la trémie 7. Les rainures 5 sur la face interne du cylindre, s'étendant depuis la trémie 7 jusqu'à la barrière thermique 3, favorisent la mise en pression et le refoulement vers l'aval des granulés. En effet, si la matière plastique en granulés tourne en faisant un bloc avec la vis, ils ne se déplaceront pas vers l'aval. Les rainures 5 du cylindre ont pour but de l'empêcher de tourner car la matière plastique en granulés prend appui sur elles et doit alors avancer comme un écrou poussé par la vis. Il faut aussi empêcher la matière plastique de fondre, ce qui détruirait cet appui et par conséquent le mouvement d'écrou. La puissance de refroidissement dans la partie amont du cylindre sera réglée de façon que les granulés ou la poudre de matière plastique soient refoulés vers l'aval à l'encontre d'une résistance importante en ne subissant qu'un échauffement relativement faible. Grâce à un refroidissement énergique de la partie amont du cylindre, on obtiendra ainsi un refoulement aussi positif que possible.

Si les rainures longitudinales sur la face interne du cylindre sont remplacées par des rainures en spirales dans le sens inverse des spirales de la vis, la matière plastique en granulés avancera également car sa rotation l'entraînera aussi vers l'aval.

La zone de plastification B, débutant juste après la barrière thermique 3, n'aura plus pour fonction d'augmenter la pression de refoulement mais d'évacuer la matière plastique aussitôt qu'elle a fondu et ceci dans des conditions d'homogénéité et de température aussi bonnes que possible.

On obtient ainsi à l'aval de la vis une masse présentant les conditions requises pour l'extrusion sous un débit élevé et de manière aussi indépendante que possible de la matière utilisée.

La disposition décrite présente le grand avantage de permettre la production d'une masse homogène parfaitement plastifiée et ayant la température voulue dans l'ouverture de sortie de l'extrudeuse pour un large éventail de conditions de fonctionnement, au moyen de la même machine. Le débit du fluide de refroidissement dans les passages de circulation 6, et par conséquent la puissance du refroidissement exercé dans la partie amont du cylindre peuvent être ajustés de façon continue. On prévoit pour cela, par exemple une vanne 15 dans le conduit d'entrée 16 du circuit de refroidissement. Une vanne peut aussi être prévue dans le conduit de sortie 17. Le degré d'ouverture de cette ou de ces vannes peut être modifié en fonction de certains paramètres de fonctionnement, par exemple la vitesse de rotation de la vis, la nature ou la granulométrie de la matière plastique introduite dans la trémie 7. Un dispositif de commande ou de réglage 18 peut agir automatiquement ou en fonction d'un programme préétabli sur la vanne 15.

Ainsi le procédé de mise en action qui vient d'être rappelé permet d'adapter une extrudeuse donnée de façon optimale à des conditions de fonctionnement très variables. Les mêmes possibilités avantageuses seraient également présentes si au lieu d'une vanne 15 on utilisait par exemple une pompe pour assurer la circulation du fluide de refroidissement.

L'effet d'adaptation à des conditions de fonctionnement variables ne peut être obtenu qu'en réglant la puissance du refroidissement dans le cylindre de la zone amont. En effet seul un réglage agissant dans cette partie de l'extrudeuse assure une adaptation assez rapide des conditions thermiques pour que la matière introduite dans la trémie atteigne l'état fluide exactement à l'endroit voulu, le long de l'extrudeuse.

**Revendication**

1. Procédé de réglage d'une extrudeuse pour matières plastiques, divisée, de manière connue en soit, en une zone amont d'alimentation et une zone aval de plastification, formée d'une vis (A, B), d'un cylindre (1, 2) et de moyens d'entraînement de la vis en rotation, accouplés directement à la vis, dans laquelle la vis comporte, dans la zone amont, un agencement amont à un filet (9) hélicoïdal coopérant avec un agencement de nervures (5) ménagé dans la face interne du cylindre pour assurer un refoulement forcé de la matière, et dans la zone aval un agencement aval à deux filets hélicoïdaux (10, 11) de pas différents déterminant un canal d'entrée (12) de section décroissante et un canal de sortie (13) de section croissante, cet agencement aval coopérant avec une face interne lisse de la zone aval du cylindre et dans laquelle, en outre, le cylindre est constitué de deux parties métalliques (1, 2) séparées l'une de l'autre dans le sens de l'axe de la vis par une barrière thermique (3), caractérisé en ce que le réglage thermique de la machine est assuré exclusivement par un circuit de refroidissement passant dans des conduits (6) logés dans l'épaisseur de la zone amont (2) du cylindre et ce réglage est conduit de manière que la matière plastique en contact avec le cylindre, dans ladite zone amont, soit maintenue à l'état solide au moins jusqu'à la barrière thermique (3).

### Claim

1. Process for regulating an extruder for plastics materials, divided, in a manner known per se, into an upstream feed zone and a downstream plasticizing zone, formed of a screw (A, B), a cylinder (1, 2), and means for driving the screw rotatingly, coupled directly to the screw, in which the screw comprises, in the upstream zone, an upstream arrangement having a helical thread (9) co-operating with an arrangement of ribs (5) contrived in the inside face of the cylinder for ensuring a forced thrusting of the material, and in the downstream zone a downstream arrangement having two helical threads (10, 11) of different pitches determining an entry channel (12) of decreasing cross-section and an exit channel (13) of increasing cross-section, this downstream arrangement co-operating with a smooth inside face of the downstream zone of the cylinder, and in which, furthermore, the cylinder is made up of two metal parts (1, 2) separated from one another in the direction of the axis of the screw by a thermal barrier (3), characterized in that the thermal regulation of the machine is ensured solely by a cooling circuit passing through ducts (6) accomodated in the thickness of the upstream zone (2) of the cylinder, and this regulation is conducted in such a way that the plastics material in contact with the cylinder, in the said upstream zone, is kept in the solid state at least up to the thermal barrier (3).

### Patentanspruch

1. Verfahren zum Regeln eines Extruders für Kunststoffe, der in an und für sich bekannter Art und Weise in einen in Fliessrichtung vorderen Zuführbereich und in einen hinteren Plastifizierungsbereich unterteilt ist, mit einer Schnecke (A, B), einem Zylinder (1, 2) und direkt an der Schnecke angekoppelten Mitteln zum Antreiben der Schnecke in eine Drehbewegung, wobei die Schnecke im vorderen Bereich eine vordere Einrichtung mit einem schraubenlinienförmigen Steg (9) umfasst, die mit einer Rippeneinrichtung (5), welche an der inneren Fläche des Zylinders angeordnet ist, zusammenwirkt, um eine erhöhte Förderung des Materials zu erreichen; und wobei im hinteren Bereich eine hintere Einrichtung mit zwei schraubenlinienförmigen Stegen (10, 11) mit unterschiedlicher Ganghöhe vorhanden ist, welche Stege einen Eingangskanal (12) mit abnehmendem Querschnitt und einen Ausgangskanal (13) mit anwachsendem Querschnitt festlegen, wobei diese hintere Einrichtung mit einer inneren glatten Fläche des hinteren Bereiches des Zylinders zusammenwirkt, und wobei im weiteren der Zylinder aus zwei metallischen Teilen (1, 2), welche voneinander in Richtung der Schneckenachse durch eine thermische Barriere (3) getrennt sind, aufgebaut ist, dadurch gekennzeichnet, dass die thermische Regelung der Maschine ausschliesslich durch einen Kühlkreis, die Leitungen (6), die in der Wandstärke des hinteren Bereiches angeordnet sind, durchquerend, festgelegt wird, und dass die Regelung so geführt wird, dass der Kunststoff, der mit dem Zylinder in Kontakt ist, im genannten hinteren Bereich mindestens bis zur thermischen Barriere (3) im festen Zustand gehalten wird.